# EUROPÄISCHE PATENTSCHRIFT

(11) **EP 0 603 151 B1**
(45) Veröffentlichungstag und Bekanntmachung des Hinweises auf die Patenterteilung: **02.01.1997**
(21) Anmeldenummer: 93890231.9
(22) Anmeldetag: 19.11.1993
(51) Int. Cl.: B65G 49/06, B65G 1/16

(54) **Vorrichtung mit Fächern**
Device with partitions
Dispositif avec casiers

(30) Priorität: 14.12.1992 AT 2468/92
(43) Veröffentlichungstag der Anmeldung: 22.06.1994
(73) Patentinhaber: Lisec, Peter, A-3363 Amstetten-Hausmening (AT)
(72) Erfinder: Lisec, Peter, A-3363 Amstetten-Hausmening (AT)
(74) Vertreter: Beer, Manfred, Dipl.-Ing.

(56) Entgegenhaltungen:
- EP-A- 0 477 163
- DE-A- 3 142 845

## Beschreibung

Die Erfindung betrifft eine Vorrichtung zum Lagern von tafel- oder plattenförmigen Gegenständen, wie Glastafeln oder Isolierglasscheiben, mit mehreren, etwa vertikal ausgerichteten Fächern zur Aufnahme der platten- oder tafelförmigen Gegenstände, mit drehangetriebenen Transportwalzen und mit etwa vertikal ausgerichteten, seitlichen Abstützungen, welche die Fächer für die tafelförmigen Gegenstände seitlich begrenzen. Eine derartige Vorrichtung ist aus der EP-A-477 163 bekannt.

Aus der DE-A-31 42 845 ist eine Vorrichtung zum Lagern von plattenförmigen Körpern bekannt. Die aus der DE-OS 31 42 845 bekannte Vorrichtung weist ein Grundelement mit einem einzigen Fach auf, in das mehrere plattenförmige Körper eingeschoben werden sollen. Das Grundelement kann durch seitlich an das Grundelement anschließbare Ergänzungselemente zu einer Vorrichtung mit mehreren Fächern ergänzt werden. Die bekannte Vorrichtung besitzt im unteren Bereich der Fächer Querträger, die aus einer Achse bestehen, auf der frei drehbar gelagerte Rollen (z.B. Kugellager oder kugelgelagerte Rollen) sitzen.

Aufgabe der Erfindung ist es, die Führung der platten- oder tafelförmigen Gegenstände sowie den Transport derselben in die Fächer hinein, aus den Fächern heraus und in den Fächern selbst zu verbessern.

Gelöst wird diese Aufgabe mit der Erfindung dadurch, daß die Fächer nach unten durch eine Bodenplatte abgeschlossen sind, daß in der Bodenplatte im Bereich jedes Faches eine Längsnut vorgesehen ist, daß in der Bodenplatte wenigstens zwei quer zu den Fächern verlaufende und im Bereich der Längsnuten zu den Fächern offene Ausnehmungen vorgesehen sind und daß in den Ausnehmungen die drehangetriebenen, vorzugsweise zylindrischen Transportwalzen angeordnet sind, die in die Nuten in der Bodenplatte reichen.

Auf diese Weise ist bei der erfindungsgemäßen Vorrichtung für eine hinreichende Führung der platten- oder tafelförmigen Gegenstände an der Bodenplatte des Fächerwagens gesorgt, wobei jedem einzelnen Fach eine Antriebsvorrichtung für die platten- oder tafelförmigen Gegenstände zugeordnet ist.

Gemäß einer bevorzugten Ausführungsform der Erfindung kann vorgesehen sein, daß die Nuten durch an der Bodenplatte angeordnete Leisten gebildet sind. Bei dieser Ausführungsform können die Nuten an der Bodenplatte auf einfache Weise hergestellt werden.

Wenn weiters vorgesehen ist, daß an der der Bodenplatte zugewandten Seite der Leisten Ausnehmungen vorgesehen sind, die über den quer zu den Fächern verlaufenden Ausnehmungen angeordnet sind, dann können die Transportwalzen zylindrische Walzen sein. Diese Ausführungsform weist den Vorteil auf, daß die Transportwalzen einfach konstruiert sein können.

Gemäß einer anderen vorteilhaften Ausführungsform der Erfindung kann vorgesehen sein, daß der Durchmesser der Transportwalzen im Bereich der Nuten größer ist als im Bereich der Leisten. In diesem Fall ist es nicht erforderlich, daß an den Leisten Ausnehmungen vorgesehen sind, in welche die Transportwalzen ragen, da die Transportwalzen durch die Ausnehmungen im Bereich der Nuten problemlos in diese hineinragen können.

Wenn gemäß der Erfindung vorgesehen ist, daß die Transportwalzen im Bereich der Nuten mit der Transportwalze reibschlüssig gekuppelte Förderringe tragen, dann rutschen die Förderringe gegenüber den Transportwalzen durch, wenn der in einem Fach aufgenommene platten- oder tafelförmige Gegenstand auf ein Hindernis aufläuft.

In Verbindung mit dem soeben genannten Merkmal ist es im Rahmen der Erfindung bevorzugt, wenn auf der der Einschubseite gegenüberliegenden Seite jedes Faches ein Anschlag vorgesehen ist. Wenn ein platten- oder tafelförmiger Gegenstand an einen derartigen Anschlag anstößt, d.h. völlig in sein Fach hineingeschoben ist, ist es nicht erforderlich, daß der Antrieb der Transportwalzen abgeschaltet wird, da die mit der Transportwalze reibschlüssig gekuppelten Förderringe auf der Transportwalze durchrutschen, wenn der Gegenstand seine Endstellung erreicht hat. Wenn die Anschläge einzeln in die oder aus der Förderbahn eines platten- oder tafelförmigen Gegenstandes in einem Fach schwenkbar sind, dann kann der betreffende platten-oder tafelförmige Gegenstand problemlos durch das Fach durchgefördert werden, wenn dies gewünscht wird.

Es kann gemäß der Erfindung auch vorgesehen sein, daß an der der Einschubseite gegenüberliegenden Seite des Fächerwagens ein durchgehender Anschlag für alle Fächer vorgesehen ist.

Im Rahmen der Erfindung kann vorgesehen sein, daß die Transportwalzen auf einem unter der Bodenplatte angeordneten Rahmen befestigt sind.

Gemäß einer weiteren, bevorzugten Ausführungsform der Erfindung kann vorgesehen sein, daß die Transportwalzen relativ zur Bodenplatte heb- und senkbar sind.

Um den technischen Aufwand für die Vorrichtung gemäß der Erfindung möglichst klein zu halten, kann vorgesehen sein, daß der Rahmen an der Bodenplatte relativ zu dieser heb- und senkbar befestigt ist.

Weiters kann im Rahmen der Erfindung vorgesehen sein, daß die Transportwalzen an einem Grundrahmen angeordnet sind und daß die Vorrichtung auf den Grundrahmen aufsetzbar ist. Diese Ausführungsform bietet den Vorteil, daß nur an dem Ort, an dem platten- oder tafelförmigen Gegenstände in Fächer der Vorrichtung gefördert werden, ein Rahmen mit Transportwalzen vorgesehen sein muß. Sobald eine Vorrichtung auf den Grundrahmen mit den Transportwalzen aufgesetzt wird, z.B. mit Hilfe eines Hubstaplers, gelangen die Transportwalzen in ihre Wirkstellung und die platten- oder tafelförmigen Gegenstände können in die Fächer gefördert werden.

Um den technischen und konstruktiven Aufwand der Vorrichtung weiter zu verringern, kann in einer bevorzugten Ausführungsform vorgesehen sein, daß im Abstand über der Bodenplatte ein zu dieser parallel ausgerichteter Balken, der mit der Bodenplatte verbunden ist, vorgesehen ist, und daß zwischen der Bodenplatte und dem Balken als seitliche Abstützungen stab-oder schnurartige Elemente gespannt sind, die mit der Bodenplatte einen spitzen Winkel einschließen. Auf diese Weise werden die Fächer für die Aufnahme der platten- oder tafelförmigen Gegenstände durch sehr wenige Elemente gebildet und es können dennoch Gegenstände mit unterschiedlicher Größe und/oder mit verschiedenen Seitenverhältnissen abgestellt werden, womit letztlich auch eine Gewichtseinsparung erzielt wird.

In einer Ausführungsform der Erfindung ist vorgesehen, daß der Balken in einer vertikalen Mittelebene der Bodenplatte vorgesehen ist und daß die die Aufnahmefächer begrenzenden Elemente von beiden Seiten des Balkens zu einander gegenüberliegenden Rändern der Bodenplatte gespannt sind. Bei dieser Ausführungsform kann die erfindungsgemäße Vorrichtung von beiden Seiten her mit tafelförmigen Gegenständen beschickt werden, wenn die Drehrichtung der Transportwalzen umkehrbar ist oder aber es können längere, tafelförmige Gegenstände eingeschoben werden, wobei sie an beiden Enden des Aufnahmefaches durch die stab- oder schnurartigen Elemente seitlich abgestützt werden.

In den angeschlossenen Zeichnungen sind Ausführungsformen der erfindungsgemäßen Vorrichtung dargestellt und werden im folgenden erläutert. Es zeigt:
Fig. 1 eine Vorrichtung in Schrägansicht,
Fig. 2 eine Einzelheit dieser Vorrichtung,
Fig. 3 einen Teil einer weiteren Ausführungsform und die
Fig. 4 und 5 eine Ausführungsform der Transportwalzen im Detail.

Die erfindungsgemäße Vorrichtung besteht aus einer Bodenplatte 1, die an ihrer Unterseite Füße 2 aufweist. Die Füße 2 können, so wie in der Zeichnung gezeigt, mit Rollen 3 bestückt sein, wobei wenigstens ein Teil der Rollen 3 als Lenkrollen ausgebildet sein kann. Die Vorrichtung ist dann ein "Fächerwagen".

Von der Bodenplatte 1 ragen Steher 4 und 5 nach oben und tragen an ihren oberen Enden einen Balken 6.

Zwischen den Längsrändern 7 und 8 der Bodenplatte 1 und dem Balken 6 sind stab- oder schnurartige Elemente 9 gespannt, die zwischen sich jeweils ein Fach 10 bilden, in das tafelförmige Gegenstände 11, 12 eingeschoben werden können.

Es ist auch eine Ausführungsform möglich, bei der die stab-oder schnurartigen Elemente 9 vom Balken 6 nur nach einer Seite, d.h. zum Längsrand 7 oder 8 der Bodenplatte 1 gespannt sind. Bei dieser Ausführungsform sind die Steher 4 und 5 bevorzugt an einem der Längsränder der Bodenplatte 1, d.h. in zwei Ecken derselben angeordnet.

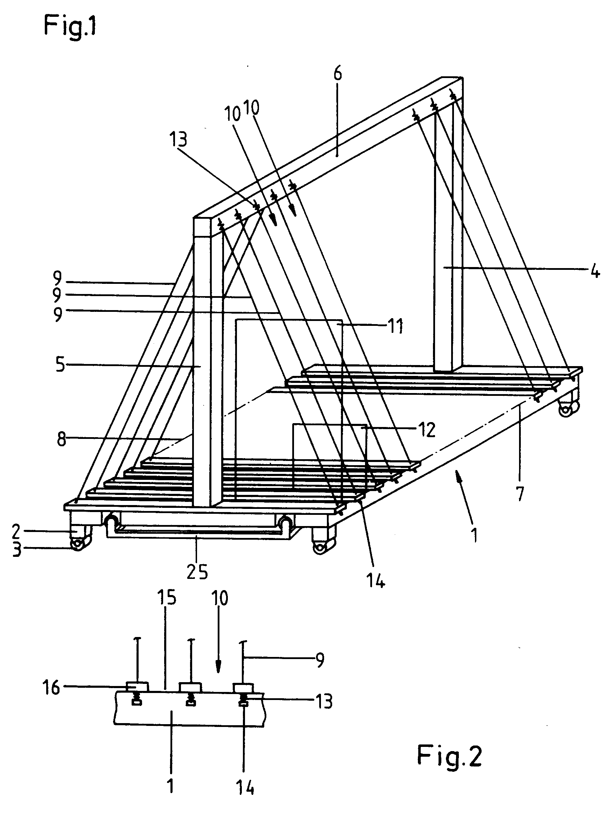

Die stab- oder schnurartigen Elemente 9 sind beispielsweise Stahlseile, die außen eine Kunststoffbeschichtung tragen. Um die nötige Spannung der stab- oder schnurartigen Elemente 9 zu gewährleisten, können, wie dies an sich aus der AT-B-394 987 bekannt ist, an einem oder an beiden Enden der Elemente 9 kurze Federn 13 vorgesehen sein, die mit Hilfe von Muttern 14 gespannt werden können, um die Elemente vorzuspannen (Fig. 2).

Im Bereich jedes Faches 10 sind in der Oberseite der Bodenplatte 1 Nuten 15 vorgesehen, die beidseits von Leisten 16 begrenzt werden, die z.B. auf der Bodenplatte 1 angeschraubt oder mit ihr einstückig ausgebildet sind. Dabei sind die Nuten 15 etwas schmäler als die von den stab- oder schnurförmigen Elementen 9 bestimmte Breite der Fächer 10, so daß sich eine Führung der einzuschiebenden plattenförmigen Gegenstände 11, 12 ergibt und diese nicht an in benachbarten Fächern 10 abgestellten Gegenständen 11, 12 entlangschleifen können. Weiters sorgen die Nuten 15 dafür, daß in den Fächern 10 abgestellte tafelförmige Gegenstände 11, 12 nur im Bereich ihrer oberen Kante an dem einen oder anderen stab- oder schnurförmigen Element 9, das ein Fach 10 begrenzt, anliegen.

Durch die Schrägstellung der stab- oder schnurförmigen Elemente 9, welche die Fächer 10 begrenzen, genügen je Fach 10 zwei stab- oder schnurförmige Elemente 9, um auch das sichere Abstellen von Gegenständen 11, 12 mit unterschiedlicher Höhe (senkrecht zur Bodenplatte 1 gemessene Erstreckung der abzustellenden Gegenstände) sicher zu halten.

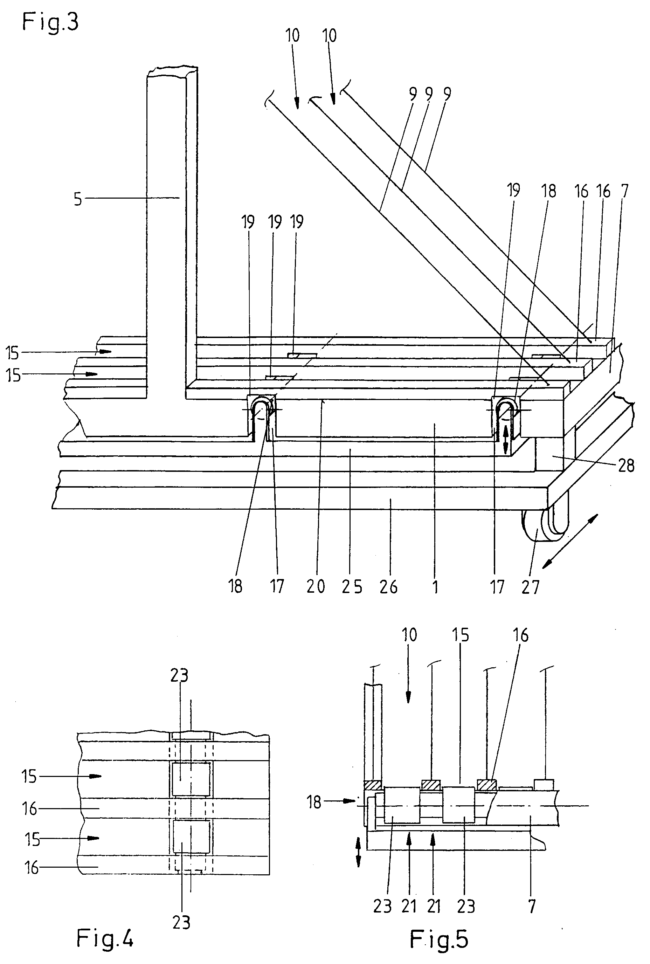

Wie aus Fig. 1 und 3 ersichtlich, sind in der Bodenplatte 1 quer zu den Nuten 15 verlaufende, nach unten offene Ausnehmungen 17 vorgesehen, in welchen Transportwalzen 18 aufgenommen sind. Dabei können auch in den Leisten 16 an ihrer der Bodenplatte 1 zugewandten Seite 20 Ausnehmungen 19 vorgesehen sein, die über den quer zu den Nuten 15 verlaufenden Ausnehmungen 17 in der Bodenplatte 1 angeordnet sind. Die Ausnehmungen 19 in den Leisten 16 sind so tief, daß die Transportwalzen 18 so weit hochgehoben werden können, daß sie in die Nuten 15 ragen und somit die tafelförmigen Gegenstände 11, 12 in die oder aus den Fächern 10 fördern können.

Die Transportwalzen 18 sind im dargestellten Ausführungsbeispiel an einem Rahmen 25 befestigt, der entweder starr an der Bodenplatte 1 befestigt ist, jedoch bevorzugt z.B. über Druckmittelzylinder relativ zur Bodenplatte 1 verstellbar ist, so daß die Transportwalzen 18 außer Eingriff mit den in den Fächern 10 aufgenommenen tafelförmigen Gegenständen 11, 12 gebracht werden können.

Bei dem in Fig. 1 dargestellten Ausführungsbeispiel ist der Rahmen 25, in dem die Transportwalzen 18 gelagert sind, an der Bodenplatte 1 angeordnet.

In Fig. 3 ist der Rahmen 25 auf nicht dargestellte Weise an einem Grundrahmen 26 angeordnet und gegebenenfalls, z.B. über Druckmittelzylinder, heb- und senkbar. Die Vorrichtung steht mit Füßen 28 auf dem Grundrahmen. Der Grundrahmen 26 weist Laufrollen 27 auf, von denen wenigstens ein Paar als Lenkrollen ausgebildet sein kann. Auf diese Weise ist die Vorrichtung mit den Fächern 10 entweder für sich alleine (Fig. 1) oder über den Grundrahmen 26 (Fig. 3) verfahrbar und kann gegenüber einer vorgelagerten Fördereinrichtung, aber beispielsweise auch gegenüber einem weiteren, hinter dem Fächerwagen angeordneten Fächerwagen positioniert werden, so daß z.B. Glastafelzuschnitte nach beliebigen Ordnungskriterien in hintereinander angeordneten Fächerwagen sortiert werden können, wie dies an sich aus der EP-A-477 163 bekannt ist.

In den Fig. 4 und 5 ist eine Ausführungsform der Transportwalzen 18 dargestellt, die im Bereich 21 der Nuten 15 einen größeren Durchmesser aufweist als im Bereich 22 der Leisten 16. Die Bereiche 21 mit größerem Durchmesser können mit der Transportwalze 18 einstückig ausgebildet sein.

Nach einer anderen Ausführungsform sind in den Bereichen 21 der Transportwalze 18 mit dieser reibschlüssig gekuppelte Förderringe 23 vorgesehen. Die Förderringe 23 können bei sich fortgesetzt drehenden Transportwalzen 18 stillstehen, wodurch verhindert wird, daß die Transportwalzen 18 oder Förderringe 23 an den tafelförmigen Gegenständen schleifen, wenn diese an den Anschlägen anstoßen.

Diese reibschlüssig gekuppelten Förderringe 23 sind insbesondere von Vorteil, wenn an der der Einschubseite gegenüberliegenden Seite 8 des Fächerwagens ein durchgehender Anschlag für alle Fächer 10 vorgesehen ist, der automatisch alle tafelförmigen Gegenstände aufhält, ohne daß der Antrieb der Transportwalzen 18 unterbrochen werden muß. Dieser Vorteil ergibt sich auch, wenn jedem Fach 10 ein eigener Anschlag zugeordnet ist. Bei der Ausführungsform mit getrennten Anschlägen ist es jedoch möglich, selektiv einzelne Fächer 10 der Vorrichtung zu öffnen und zu schließen, um beispielsweise ein Sortieren von Glastafelzuschnitten zu ermöglichen, wie weiter oben bereits erwähnt wurde.

Zusätzlich können die Transportwalzen 18 entweder vollständig oder nur im Bereich der Nuten 15 mit einer elastischen Auflage, wie einem Polyurethan-Elastomer (Vulkollan) beschichtet sein. Auch die Förderringe 23 können mit einer elastischen Auflage beschichtet sein.

## Patentansprüche

1. Vorrichtung zum Lagern von tafel- oder plattenförmigen Gegenständen, wie Glastafeln oder Isolierglasscheiben, mit mehreren, etwa vertikal ausgerichteten Fächern (10) zur Aufnahme der platten- oder tafelförmigen Gegenstände (11, 12), mit drehangetriebenen Transportwalzen (18) und mit etwa vertikal ausgerichteten, seitlichen Abstützungen (9), welche die Fächer (10) für die tafelförmigen Gegenstände (11, 12) seitlich begrenzen, dadurch gekennzeichnet, daß die Fächer nach unten durch eine Bodenplatte (1) abgeschlossen sind, daß in der Bodenplatte (1) im Bejedes Faches (10) eine Längsnut (15) vorgesehen ist, daß in der Bodenplatte (1) wenigstens zwei quer zu den Fächern (10) verlaufende und im Bereich der Längsnuten (15) zu den Fächern (10) offene Ausnehmungen (17) vorgesehen sind und daß in den Ausnehmungen (17) die drehangetriebenen, vorzugsweise zylindrischen Transportwalzen (18) angeordnet sind, die in die Nuten (15) in der Bodenplatte (1) reichen.

2. Vorrichtung nach Anspruch 1, dadurch gekennzeichnet, daß die Längsnuten (15) durch an der Bodenplatte (1) angeordnete Leisten (16) gebildet sind.

3. Vorrichtung nach Anspruch 2, dadurch gekennzeichnet, daß an der der Bodenplatte (1) zugewandten Seite (20) der Leisten (16) Ausnehmungen (19) vorgesehen sind, die über den quer zu den Fächern (10) verlaufenden Ausnehmungen (17) angeordnet sind.

4. Vorrichtung nach einem der Ansprüche 1 bis 3, dadurch gekennzeichnet, daß der Durchmesser der Transportwalzen (18) im Bereich (21) der Längsnuten (15) größer ist als im Bereich (22) der Leisten (16).

5. Vorrichtung nach einem der Ansprüche 1 bis 4, dadurch gekennzeichnet, daß die Transportwalzen (18) im Bereich der Längsnuten (15) mit der Transportwalze (18) reibschlüssig gekuppelte Förderringe (23) tragen.

6. Vorrichtung nach einem der Ansprüche 1 bis 5, dadurch gekennzeichnet, daß auf der der Einschubseite (7) gegenüberliegenden Seite (8) jedes Faches (10) ein Anschlag vorgesehen ist.

7. Vorrichtung nach einem der Ansprüche 1 bis 5, dadurch gekennzeichnet, daß an der der Einschubseite (7) gegenüberliegenden Seite (8) der Vorrichtung ein durchgehender Anschlag für alle Fächer (10) vorgesehen ist.

8. Vorrichtung nach einem der Ansprüche 1 bis 7, dadurch gekennzeichnet, daß die Transportwalzen (18) auf einem unter der Bodenplatte (1) angeordneten Rahmen (25) befestigt sind.

9. Vorrichtung nach einem der Ansprüche 1 bis 8, dadurch gekennzeichnet, daß die Transportwalzen (18) relativ zur Bodenplatte (1) heb- und senkbar sind.

10. Vorrichtung nach Anspruch 8, dadurch gekennzeichnet, daß der Rahmen (25) an der Bodenplatte (1) relativ zu dieser heb- und senkbar befstigt ist.

11. Vorrichtung nach Anspruch 8 und 9, dadurch gekennzeichnet, daß die Transportwalzen (18) bei an der Vorrichtung befestigtem Rahmen (25) in ihrer Wirkstellung sind.

12. Vorrichtung nach einem der Ansprüche 1 bis 7, dadurch gekennzeichnet, daß die Transportwalzen (10) an einem Grundrahmen (26) angeordnet sind und daß die Vorrichtung auf den Grundrahmen (26) aufsetzbar ist.

13. Vorrichtung nach Anspruch 12, dadurch gekennzeichnet, daß Führungen zum Aufschieben der Vorrichtung auf den Grundrahmen (26) parallel zur Richtung der Fächer (10) vorgesehen sind.

14. Vorrichtung nach Anspruch 12 oder 13, dadurch gekennzeichnet, daß der Rahmen (25) mit den Transportwalzen (18) am Grundrahmen (26) heb- und senkbar befestigt ist.

15. Vorrichtung nach einem der Ansprüche 12 bis 14, dadurch gekennzeichnet, daß der Grundrahmen (26) Rollen (23) aufweist, von denen vorzugsweise wenigstens zwei Lenkrollen sind.

16. Vorrichtung nach einem der Ansprüche 1 bis 15, dadurch gekennzeichnet, daß im Abstand über der Bodenplatte (1) ein zu dieser parallel ausgerichteter Balken (6), der mit der Bodenplatte (1) verbunden ist, vorgesehen ist, und daß zwischen der Bodenplatte (1) und dem Balken (6) als seitliche Abstützungen (9) stab- oder schnurartige Elemente gespannt sind, die mit der Bodenplatte (1) einen spitzen Winkel einschließen.

17. Vorrichtung nach Anspruch 16, dadurch gekennzeichnet, daß der Balken (6) in einer vertikalen Mittelebene der Bodenplatte (1) vorgesehen ist und daß die die Fächer (10) begrenzenden Elemente (9) von beiden Seiten des Balkens (6) zu einander gegenüberliegenden Rändern (7, 8) der Bodenplatte (1) gespannt sind.

18. Vorrichtung nach einem der Ansprüche 1 bis 17, dadurch gekennzeichnet, daß die Längsnuten (15) schmäler sind als die Fächer (10).

19. Vorrichtung nach einem der Ansprüche 16 bis 18, dadurch gekennzeichnet, daß die stab- oder schnurartigen Elemente (9) über elastische Elemente (13) vorgespannt sind.

20. Vorrichtung nach einem der Ansprüche 16 bis 19, dadurch gekennzeichnet, daß die stab- oder schnurartigen Elemente (9) Stahldrähte oder -seile sind, die außen eine Schutzhülle tragen.

21. Vorrichtung nach Anspruch 19, dadurch gekennzeichnet, daß die Schutzhülle aus Kunststoff besteht.

22. Vorrichtung nach einem der Ansprüche 1 bis 21, dadurch gekennzeichnet, daß die Bodenplatte (1) an ihrer Unterseite Füße (2, 28) aufweist.

## Claims

1. Apparatus for storing sheet or plate-form articles, such as glass sheets or panes of insulation glass, with a plurality of approximately vertically disposed compartments (10) for reception of the plate or sheet-form articles (11, 12), with rotationally driven transport rolls (18) and with approximately vertically disposed lateral supports (9) which delimit the compartments (10) for the sheet-form articles (11, 12) at the sides, characterized in that the compartments are closed at the bottom by a bottom plate (1), in that a longitudinal groove (15) is provided in the bottom plate (1) in the region of each compartment (10), in that at least two recesses (17) running transverse to the compartments (10) are provided in the bottom plate (1) and are open to the compartments (10) in the regions of the longitudinal grooves (15), and in that the rotationally driven, preferably cylindrical transport rolls (18) are arranged in the recesses (17) and extend into the grooves (15) in the bottom plate (1).

2. Apparatus according to claim 1, characterized in that the longitudinal grooves (15) are formed by strips (16) arranged on the bottom plate (1).

3. Apparatus according to claim 2, characterized in that recesses (19) are provided in the sides (20) of the strips (16) facing the bottom plate (1) and are arranged over the recesses (17) running transverse to the compartments (10).

4. Apparatus according to any of claims 1 to 3, characterized in that the diameter of the transport rolls (18) is greater in the regions (21) of the longitudinal grooves (15) than in the regions (22) of the strips (16).

5. Apparatus according to any of claims 1 to 4, characterized in that the transport rolls (18) carry feed rings (23) in the regions of the longitudinal grooves (15), frictionally coupled to the transport rolls (18).

6. Apparatus according to any of claims 1 to 5, characterized in that a stop is provided at the end (8) of each compartment (10) opposite the infeed end (7).

7. Apparatus according to any of claims 1 to 5, characterized in that a continuous stop for all compartments (10) is provided at the end (8) of the apparatus opposite the infeed end (7).

8. Apparatus according to any of claims 1 to 7, characterized in that the transport rolls (18) are fixed on a frame (25) arranged under the bottom plate (1).

9. Apparatus according to any of claims 1 to 8, characterized in that the transport rolls (18) can be raised and lowered relative to the bottom plate (1).

10. Apparatus according to claim 8, characterized in that the frame (25) is attached to the bottom plate (1) so that it can be raised and lowered relative thereto.

11. Apparatus according to claims 9 and 10, characterized in that the transport rolls (18) are in their operative position with the frame (25) attached to the apparatus.

12. Apparatus according to any of claims 1 to 7, characterized in that the transport rolls (10) are arranged on a base frame (26) and in that the apparatus can be stood on the base frame (26).

13. Apparatus according to claim 12, characterized in that guides are provided for shifting the apparatus on the base frame (26) parallel to the direction of the compartments (10).

14. Apparatus according to claim 12 or 13, characterized in that the frame (25) with the transport rolls (18) is attached to the base frame (26) so that it can be raised and lowered.

15. Apparatus according to any of claims 12 to 14, characterized in that the base frame (26) has rollers (23), of which at least two are preferably steering rollers.

16. Apparatus according to any of claims 1 to 15, characterized in that a beam (6) is provided spaced above the bottom plate (1) and aligned parallel thereto and is connected to the bottom plate (1), and in that rod or cord-like elements are tensioned between the bottom plate (1) and the beam (6) as lateral supports (9) and include an acute angle with the bottom plate (1).

17. Apparatus according to claim 16, characterized in that the beam (6) is provided in a vertical central plane of the base plate (1) and in that the elements (9) delimiting the compartments (10) are tensioned from both sides of the beam (6) to mutually opposite edges (7, 8) of the bottom plate (1).

18. Apparatus according to any of claims 1 to 17, characterized in that the longitudinal grooves (15) are narrower than the compartments (10).

19. Apparatus according to any of claims 16 to 18, characterized in that the rod or cord-like elements (9) are pre-tensioned by elastic elements (13).

20. Apparatus according to any of claims 16 to 19, characterized in that the rod or cord-like elements (9) are steel wires or cables carrying external protective sheaths.

21. Apparatus according to claim 20, characterized in that the protective sheath consists of plastics material.

22. Apparatus according to any of claims 1 to 21, characterized in that the bottom plate (1) has feet (2, 28) on its underside.

## Revendications

1. Dispositif pour le stockage d'objets en feuilles ou en plaques, tels que des feuilles de verre ou des vitrages isolants, comportant plusieurs compartiments (10) orientés sensiblement verticalement destinés à recevoir des objets (11, 12) en feuilles ou en plaques, des rouleaux (18) de transport entraînés en rotation et des moyens d'appui (9) latéraux orientés sensiblement verticalement, qui délimitent latéralement les compartiments (10) pour les objets (11, 12) en feuilles, caractérisé par le fait que les compartiments (10) sont fermés vers le bas par une plaque de fond (1), par le fait qu'une rainure longitudinale (15) est prévue dans la plaque de fond (1) dans la région de chaque compartiment (10), par le fait qu'au moins deux évidements (17) ouverts en direction des compartiments (10) sont prévus dans la plaque de fond (1), transversalement aux compartiments (10) et dans la région des rainures longitudinales (15), et par le fait que des rouleaux de transport (18) de préférence cylindriques, entraînés en rotation, qui pénètrent dans les rainures (15) dans la plaque de fond (1) sont disposés dans les évidements (17).

2. Dispositif selon la revendication 1, caractérisé par le fait que les rainures longitudinales (15) sont formées par des barres (16) disposées sur la plaque de fond (1)

3. Dispositif selon la revendication 2, caractérisé par le fait que des évidements (19) sont prévus sur la face des barres (19) tournée vers la plaque de fond (1), lesquels évidements sont disposés au-dessus des évidements (17) qui s'étendent transversalement aux compartiments (10).

4. Dispositif selon l'une des revendications 1 à 3, caractérisé par le fait que le diamètre des rouleaux de transport (18), dans la région (21) des rainures longitudinales (15) est plus grand que dans la région (22) des barres (16).

5. Dispositif selon l'une des revendications 1 à 4, caractérisé par le fait que les rouleaux de transport (18), dans la région (21) des rainures longitudinales (15), portent des bagues de transport (23) qui sont couplées par adhérence au rouleau de transport (18).

6. Dispositif selon l'une des revendications 1 à 5, caractérisé par le fait qu'il est prévu une butée sur le côté (8) de chaque compartiment (10) opposé au côté (7) d'introduction.

7. Dispositif selon l'une des revendications 1 à 5, caractérisé par le fait qu'il est prévu sur le côté (8) du dispositif opposé au côté (7) d'introduction une butée continue pour tous les compartiments (10).

8. Dispositif selon l'une des revendications 1 à 7, caractérisé par le fait que les rouleaux de transport (18) sont fixés à un cadre (25) qui est disposé sous la plaque de fond (1).

9. Dispositif selon l'une des revendications 1 à 8, caractérisé par le fait que les rouleaux de transport (18) peuvent être montés et abaissés par rapport à la plaque de fond (1).

10. Dispositif selon la revendication 8, caractérisé par le fait que le cadre (25) est fixé à la plaque de fond (1), avec possibilité de montée et de descente par rapport à celle-ci.

11. Dispositif selon les revendications 8 et 9, caractérisé par le fait que les rouleaux de transport (18) sont en position de travail lorsque le cadre (25) est fixé au dispositif.

12. Dispositif selon l'une des revendications 1 à 7, caractérisé par le fait que les rouleaux de transport (18) sont disposés sur un châssis (26) et par le fait que le dispositif peut être placé sur le châssis (26).

13. Dispositif selon la revendication 12, caractérisé par le fait que des glissières sont prévues pour glisser le dispositif sur le châssis (26), parallèlement à la direction des compartiments (10).

14. Dispositif selon la revendication 12 ou 13, caractérisé par le fait que le cadre (25) avec les rouleaux de transport (18) est fixé sur le châssis, avec possibilité de montée et de descente.

15. Dispositif selon l'une des revendications 12 à 14, caractérisé par le fait que le bâti (26) est pourvu de roulettes (23), parmi lesquelles deux au moins sont des roulettes orientables.

16. Dispositif selon l'une des revendications 1 à 15, caractérisé par le fait qu'il est prévu à distance au-dessus de la plaque de fond (1) une poutre (6) qui est parallèle à ladite plaque de fond (1) et est liée à celle-ci (1) et par le fait que des éléments sous forme de tringle ou de cordon, qui forment un angle aigu avec la plaque de fond sont tendus en tant qu'éléments d'appui (9) latéraux entre la plaque de fond (1) et la poutre (6).

17. Dispositif selon la revendication 16, caractérisé par le fait que la poutre (6) est prévue dans un plan médian vertical de la plaque de fond (1) et par le fait que les éléments (9) qui délimitent les compartiments (10) sont tendus de part et d'autre de la poutre (6) en direction de bords (7, 8) en vis-à-vis de la plaque de fond (1).

18. Dispositif selon l'une des revendications 1 à 17, caractérisé par le fait que les rainures longitudinales (15) sont plus étroites que le compartiments (10).

19. Dispositif selon l'une des revendications 16 à 18, caractérisé par le fait que les éléments (9) en forme de tringle ou de cordon sont tendus au moyen d'éléments (13) élastiques

20. Dispositif selon l'une des revendications 16 à 19, caractérisé par le fait que les éléments (9) en forme de tringle ou de cordon sont des fils ou des câbles d'acier pourvus extérieurement d'une enveloppe protectrice.

21. Dispositif selon la revendication 19, caractérisé par le fait que l'enveloppe protectrice est en matière plastique.

22. Dispositif selon l'une des revendications 1 à 21, caractérisé par le fait que la plaque de fond (1), sur sa face inférieure, est pourvue de pieds (2, 28).
